# EUROPEAN PATENT SPECIFICATION

(11) **EP 0 985 559 B1**
(45) Date of publication and mention of the grant of the patent: **12.01.2005**
(21) Application number: 99117433.5
(22) Date of filing: 08.09.1999
(51) Int. Cl.: B60C 23/00, B60C 25/00

(54) **Safety inflation cage for tyres**
Sicherheitskäfig für Reifenfülleinrichtung
Cage de securite de gonflage de pneumatiques

(30) Priority: 11.09.1998 IT VR980048 U
(43) Date of publication of application: 15.03.2000
(73) Proprietor: BUTLER ENGINEERING & MARKETING S.r.l., 42010 Rio Saliceto (Reggio Emilia) (IT)
(72) Inventor: Gonzaga, Tullio, 42015 Correggio (Prov. Reggio Emilia) (IT)
(74) Representative: Reniero, Cirillo Silvano

(56) References cited:
- WO-A-95/29071
- US-A- 4 381 027

## Description

The present invention relates to a safety cage for inflating tires, in particular tires for industrial vehicles such as trucks, tractors and the like.

It is known to use a protection cage for inflating tires mounted on a respective rim before mounting a wheel on industrial vehicles to avoid or at least drastically limit the ruinous consequences of a tire burst. A tire can in fact be caused to bear a pressure of up to one megapascal, which entails a significant risk of bursting.

The cages generally used up to now are parallelepiped in shape and have a sturdy frame which is closed on all sides by a strong wire mesh, except for the bottom side for the insertion of the tire.

Such a cage is known for example from US 4,381,027, as well as a cage according to the preamble of claim 1.

The cage is usually pivoted to a supporting bed-plate which is usually provided with means for receiving a wheel to be inflated, and thus it can be fully raised and lowered with a partial rotation about its pivoting axis with respect to the bed-plate.

Such a configuration of course implies that an operator manually lifts the cage in order to turn it about its pivoting axis and this, in addition to being tiring, is also dangerous for the operator's safety.

Another drawback is constituted by the fact that the cage owing to its configuration in case of tire burst does not uniformly absorb the centrifugal thrusts that are generated inside it and thus produces a resultant force which must be contrasted by means of suitable anchoring means to the bed-plate, e.g. by means of bolts and/or latches provided with a safety device, which of course must be activated and deactivated each time for every tire to be inflated.

The main object of the present invention is to provide a safety inflation cage which is arranged to eliminate or drastically reduce the drawbacks referred to above.

Another object of the present invention is to provide an inflation cage which can withstand tire bursting without moving, lifting or undergoing deformations, thereby ensuring safety for people and property.

Another object of the present invention is to provide a safety inflation cage which can be manufactured easily and does not require any retention devices to be activated when the cage is being closed and deactivated when being opened and accordingly has a low production cost, so as to be advantageous also from the economic point of view.

These and other objects which will become better apparent hereinafter are achieved by a tire inflation cage which comprises a rigid frame and a protection covering supported by the frame which is suitable for allowing air to flow therethrough but retaining solid objects, characterized in that said frame comprises a fixed portion arranged to contain at least one vehicle wheel with a tire thereon and to be anchored to a bed-plate or to the ground, and a moving door portion which is supported by said fixed portion so that it can be moved between a closed position and an open position and has a mass distribution which causes it to move to its closed position by gravity under its own weight when it is moved away from its open position.

Advantageously, said door portion is mounted for rotation about an axis of rotation on the fixed portion and is shaped like a cylindrical sector so as to uniformly distribute the thrusts to which it is subjected upon bursting of a tire inside the cage, so that the resulting thrust intersects the rotation axis of said door, thereby preventing its opening.

The invention is further described hereinafter with reference to the accompanying drawings, wherein:
Figure 1 is a perspective view slightly from above of an inflation cage containing a tire and with its door in closed position;
Figure 2 is a different perspective view slightly from above of the inflation cage of Figure 1, with its door in open position;
Figures 3, 4 and 5 are respectively a lateral elevation view, a rear elevation view and a plan view, in reduced scale, of the inflation cage of Figures 1 and 2, with its door in closed position;
Figures 6, 7 and 8 are a rear elevation view, a lateral elevation view, and a plan view, respectively, in reduced scale, of the same inflation cage with the door in its open position; and
Figure 9 is a lateral enlarged-scale elevation view of an inflation cage according to the invention, containing a tire while being inflated.

With reference to the Figures listed above, the numeral 1 generally designates an inflation cage according to the invention, which comprises a fixed frame 2, provided with means, such as lugs 3 and 4, for securing it to the ground or to a bed-plate (not shown), a door 5 mounted for rotation about a horizontal axis, and an inflation device 6.

The fixed frame 2 can have a U-shaped base element 7 which comprises two arms 8 and a cross-member 9 connecting the arms 8. The arms 8 are also connected by a bed-plate 10 which is rigidly secured to them, e.g. by welding, and is designed to support a wheel with a tire 11 thereon. Two uprights 12 extend upwards from the cross-member 9 substantially at right angles to the supporting plane delimited by the base element 7. The upper ends 14 of the uprights 12 are curved so as to extend parallel above the supporting plane 13 on the same side as the U-shaped element 7, but for a shorter length than the arms 8. The ends 14 abut against, and are rigidly coupled to, a stiffening arch 15 whose concavity faces downward. Two coaxial bushes 17 can be fixed to the lower ends 16 of the arch 15.

One respective end of an intermediate reinforcement tubular element 18 and of an oblique front longitudinal member 19 are also secured to each one of said bushes 17. The tubular element 18 extends around the entire perimeter of the fixed frame 2 and is also secured to an intermediate portion of the uprights 12, while the other end of the longitudinal member 19 is fixed, e.g. welded, to the free end of a respective arm 8.

The lower end of each oblique longitudinal member 19 is provided with a fixing lug which protrudes outward from the fixed frame 2 and has a through hole 23 for the insertion of a ground fixing means, e.g. a screw. A third lug 4 is rigidly secured to the intermediate section of the cross-member 9 to ensure that cage 1 is properly secured to the ground.

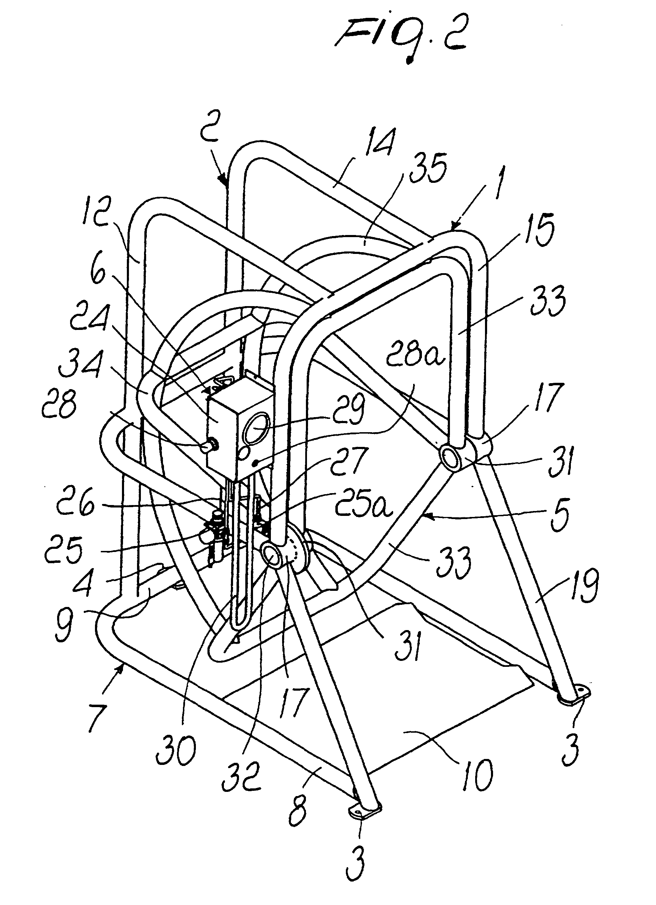

As shown in Figure 2, the inflation device 6 is located laterally to the arch 15, on the outside of the fixed frame 2.

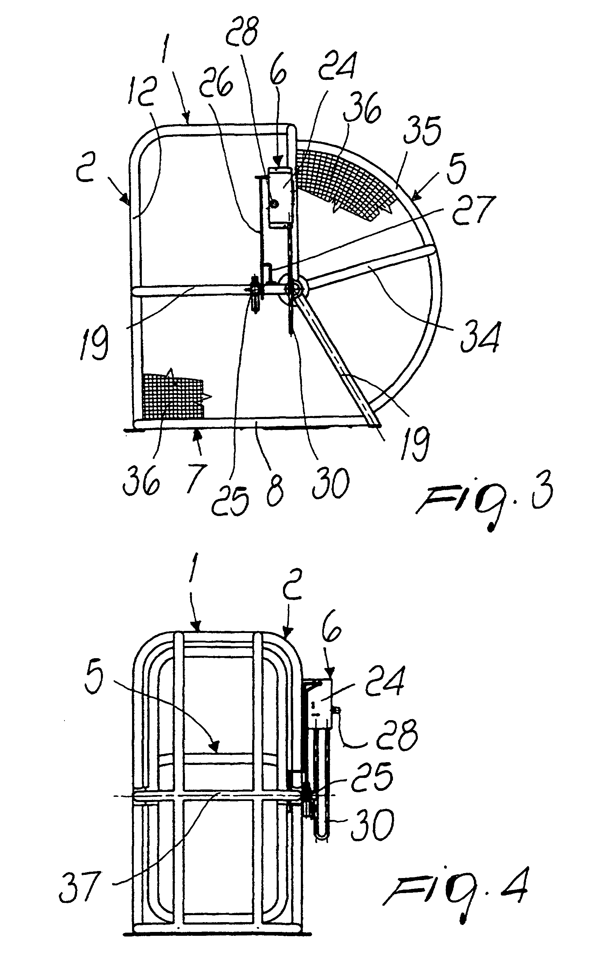

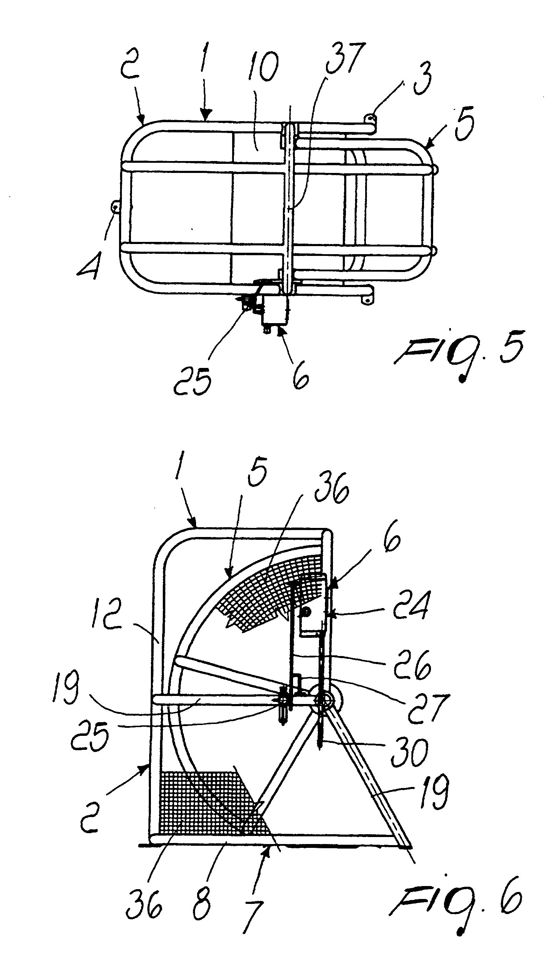

With reference to Figures 3 to 8, it will be noted that the device 6 comprises a control and adjustment unit 24, a safety valve 25 which can be connected to a compressed air source (not shown in the drawings) and in communication with the unit 24 through a duct 26, from which a tube 27 branches out for a sensor or transducer 25a, which is arranged to generate a control signal for closing the outlet of the valve 25 when the rotating door 25 is not in its fully closed position.

A flexible hose 30 extends from the unit 24 and can be moved manually for the inflation of a tire 11, as will be also described hereafter. The control and adjustment unit 24 also has a knob 28 which is designed to set the pressure of the air to be supplied to the tire 11, a dial 29 for reading said pressure, and a control button 28a (Fig. 2).

The oscillating cover 5 comprises two bushes 31, each of which is rigidly coupled to a respective protruding pivot 32 designed to be inserted in the corresponding bush 17 of the fixed frame 2, two U-shaped end cross-members 33, at least one intermediate cross-member 34, which extends radially from the bushes 31, and two curved lateral members 35 fixed to the longitudinal members 33 and 34. When the door 5 is in its closed position, members 35 constitute a continuation of the fixed frame 2 which has an externally convex circular curvature, whereas the end cross-members 33 are arranged so as to follow the perimetric profile delimited by the oblique longitudinal members 19 and by the arch 15 of the fixed frame 2.

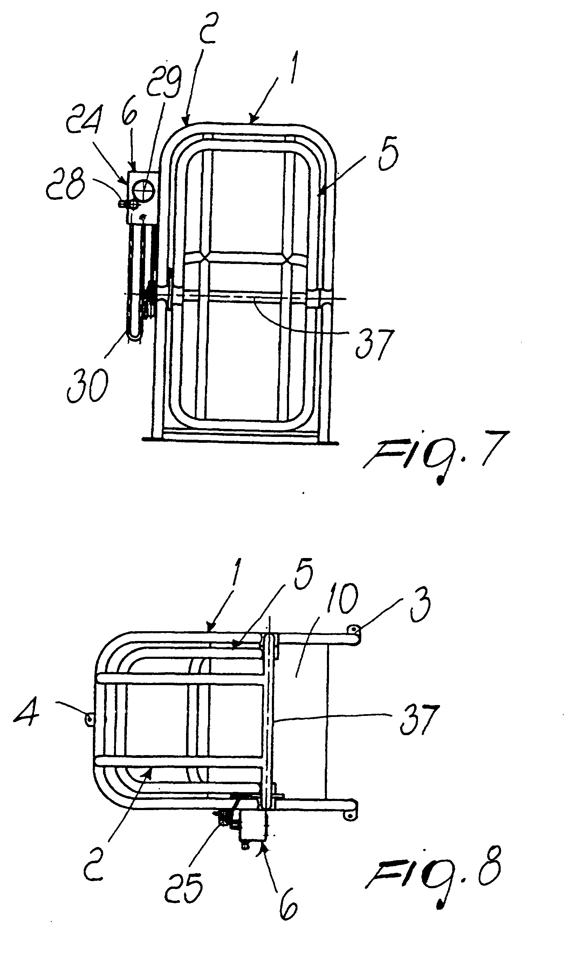

As shown in Figures 3 and 6, both fixed frame 2 and cover 5 are covered by a net 36 (or another material which is strong enough and through which air can easily permeate) fixed to the various arms and longitudinal members 19, 33 and 34, uprights 12 and members 35 of the cage 1. The net 36 is close-mesh net, so as to offer suitable resistance to solid bodies should a tire burst occur.

As an alternative to the net 36, the covering of the cage 1 can be at least partly constituted by metal sheet or impact-resistant plastic material in combination with portions of net 36 or another material through which air can easily pass.

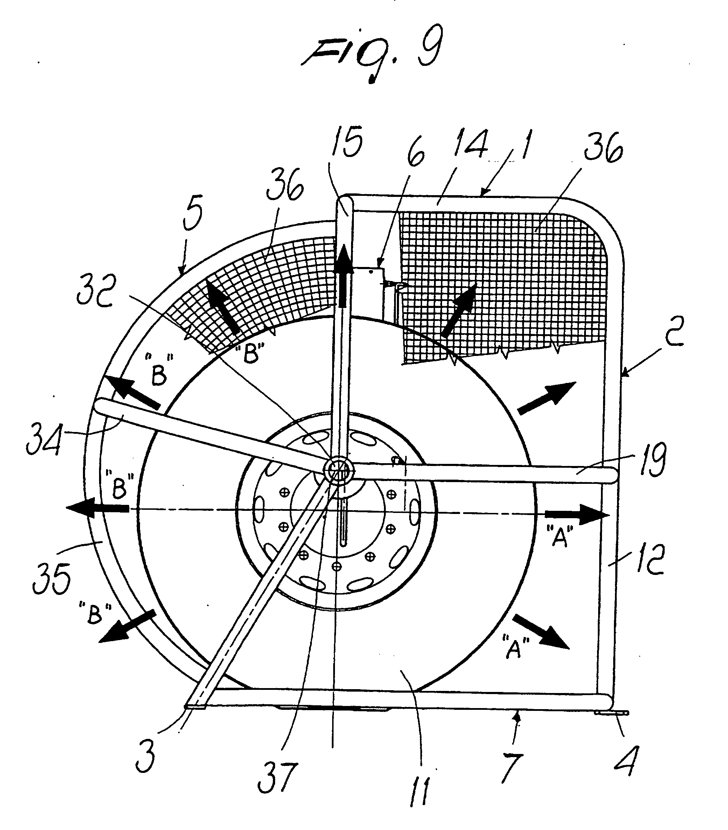

The oscillating door 5 has a mass distribution which ensures that its center of gravity lies outside the fixed frame 2, so as to produce a mechanical moment, with respect to the axis of rotation 37 (Fig. 9) that coincides with the axis along which bushes 17 are aligned, thereby moving the cover 5 to its closure position in any case and keeping it closed owing to its cylindrical configuration, even if a tire burst occurs.

With specific reference to Figure 9, it will be noted that any burst would result in radial thrusts being generated, as indicated by arrows A, which are discharged onto the fixed frame 2 and are counter-balanced by reaction on the restraints constituted by the lugs 3 and 4 secured to the ground, whereas the thrusts indicated by arrows B are discharged onto the door 5. Since the door is configurated as a cylindrical sector, the resultant of such thrusts thereon necessarily intersects the axis of rotation 37 without causing any mechanical moment and thus stressing only the pivots 32 and the bushes 17 without opening the door 5. Accordingly, the oscillating door 5 does not need any retention means, as is the case instead, with conventional inflation cages.

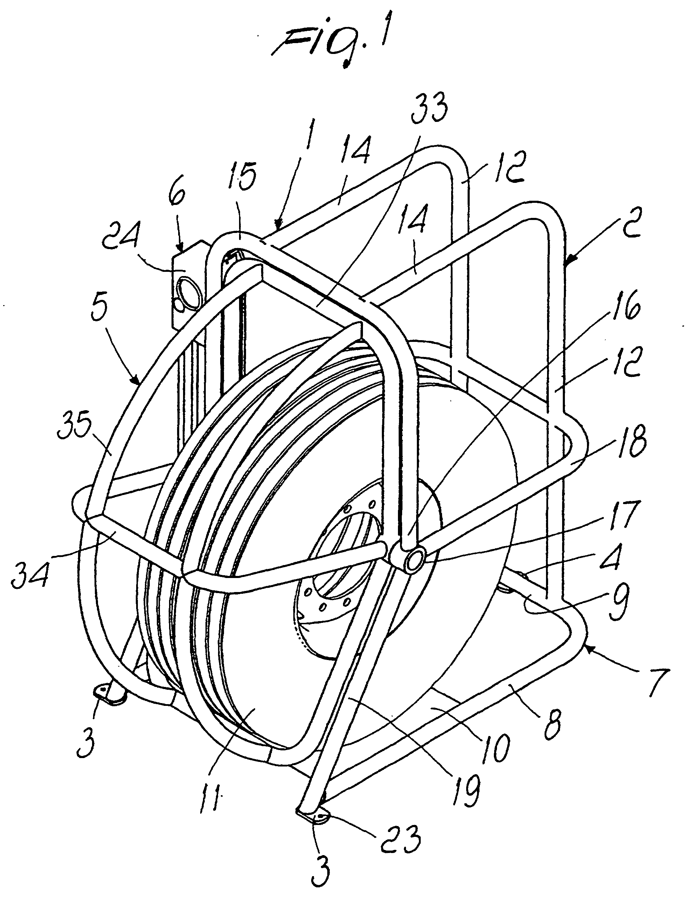

The tire 11 can be inflated as follows. The valve element 35 is connected to a compressed air source. The door 5 is lifted and pushed into the fixed frame 2, thereby allowing access to the inside of the cage 11 (Figures 2, 6, 7 and 8). Meanwhile, compressed air supply is cut off by causing the valve element 25 to be closed by the sensor or transducer 25a. The tire 11 is rolled into the cage 1 above the bed-plate 10. The feeding delivery tube 30 of the inflation device 6 is connected to the valve of the tire 11 by passing through the door 5 still opened. The door 5 is then closed (Figures 1, 3, 4, 5 and 9), thus releasing the outlet of the valve 25, and the control and adjustment unit 24 is operated to set a predetermined pressure. At this point button 28a is pressed and thus compressed air is fed into the tire 11 through the delivery hose 30 until the preset pressure is reached. The door 5 is then lifted with no effort and the inflated tire 11 is removed.

It will be noted that a safety inflation cage 1 is suitable for achieving the intended objects, in particular for ensuring optimum safety conditions in a simple and practical way.

The materials and the dimensions may be various according to requirements.

The invention is susceptible of numerous modifications and variations within the protection scope defined by the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tire inflation cage, comprising a rigid frame and a protection covering supported by the frame (2) which is suitable for allowing air to flow therethrough, but retaining solid objects, **characterized in that** said frame (2) comprises a fixed portion arranged to contain at least one vehicle wheel with a tire (11) thereon and to be anchored to a bed-plate (10) or to the ground, and a moving door portion (5) which is supported by said fixed portion so that it can be moved between a closed position and an open position and has a mass distribution which makes it close spontaneously by gravity under its own weight when it is moved away from its open position.

2. A cage according to claim 1, **characterized in that** said door (5) is mounted for rotation on said fixed portion and is shaped like a cylindrical sector so as to uniformly distribute any thrust to which it is subjected upon bursting of a tire (5) inside the cage (1), so that the resulting thrust intersects the axis of rotation of said door (5), thereby preventing it from being opened.

3. A cage according to claim 2, **characterized in that** said door (5), in its open position, is fully retracted into said fixed frame (2).

4. A cage according to any one of the preceding claims, **characterized in that** said fixed frame (2) comprises an inflation device (6) which is external with respect to said cage (1).

5. A cage according to claim 4, **characterized in that** said inflation device (6) comprises a pressure control and adjustment unit (24), a safety valve means (25) which can be connected to a compressed air source and is connected to said control unit (24), and a sensor or transducer means (25a) arranged to block said valve means (25) when said door (5) is not in its closed position.

6. A cage according to any one of the preceding claims, **characterized in that** said fixed portion (2) and said door (5) are formed by welded tubular segments.

7. A cage according to any one of the preceding claims, **characterized in that** it is covered by a protection means.

8. A cage according to claim 7, **characterized in that** said protection means is at least partly constituted by metal plate.

9. A cage according to claim 7, **characterized in that** said protection means comprises a perforated impact-resistant sheet plastic material.

## Patentansprüche

1. Reifenaufpumpkäfig, der einen starren Rahmen und eine von dem Rahmen (2) getragene Schutzabdeckung, durch die Luft strömen kann, die jedoch feste Objekte zurückhält, umfasst, **dadurch gekennzeichnet, dass** der Rahmen (2) einen unbeweglichen Abschnitt, der wenigstens ein Fahrzeugrad mit einem Reifen (11) aufnehmen kann und an einer Bodenplatte (10) oder am Boden verankert ist, und einen beweglichen Türabschnitt (5), der von dem unbeweglichen Abschnitt so getragen wird, dass er zwischen einer geschlossenen Stellung und einer offenen Stellung bewegt werden kann, und eine Massenverteilung besitzt, die ihn aufgrund der Schwerkraft durch sein Eigengewicht selbstständig schließt, wenn er aus seiner geöffneten Stellung bewegt wird, umfasst.

2. Käfig nach Anspruch 1, **dadurch gekennzeichnet, dass** die Tür (5) am unbeweglichen Abschnitt drehbar angebracht ist und wie ein Zylindersektor geformt ist, um jeglichen Schub, dem er beim Platzen eines Reifens (5) innerhalb des Käfigs (1) unterliegt, gleichmäßig zu verteilen, so dass der resultierende Schub die Drehachse der Tür (5) schneidet, wodurch deren Öffnen verhindert wird.

3. Käfig nach Anspruch 2, **dadurch gekennzeichnet, dass** die Tür (5) in ihrer offenen Stellung vollständig in den festen Rahmen (2) eingefahren ist.

4. Käfig nach einem der vorhergehenden Ansprüche, **dadurch gekennzeichnet, dass** der feste Rahmen (2) eine Aufpumpvorrichtung (6) aufweist, die sich außerhalb des Käfigs (1) befindet.

5. Käfig nach Anspruch 4, **dadurch gekennzeichnet, dass** die Aufpumpvorrichtung (6) eine Drucksteuerungs- und Druckeinstelleinheit (24), Sicherheitsventilmittel (25), die mit einer Druckluftquelle verbunden werden können und mit der Steuereinheit (24) verbunden sind, und Sensor- oder Wandlermittler (25a), die so beschaffen sind, dass sie die Ventilmittel (25) sperren, wenn sich die Tür (5) nicht in ihrer geschlossenen Stellung befindet, umfasst.

6. Käfig nach einem der vorhergehenden Ansprüche, **dadurch gekennzeichnet, dass** der unbewegliche Abschnitt (2) und die Tür (5) durch verschweißte rohrförmige Segmente gebildet sind.

7. Käfig nach einem der vorhergehenden Ansprüche, **dadurch gekennzeichnet, dass** er mit Schutzmitteln abgedeckt ist.

8. Käfig nach Anspruch 7, **dadurch gekennzeichnet, dass** die Schutzmittel wenigstens teilweise durch eine Metallplatte gebildet sind.

9. Käfig nach Anspruch 7, **dadurch gekennzeichnet, dass** die Schutzmittel einen perforierten, stoßbeständigen folienartigen Kunststoff enthalten.

## Revendications

1. Une cage de gonflement de pneumatique comprenant un cadre rigide et un revêtement de protection soutenu par le cadre (2) pouvant être adapté pour permettre une circulation d'air à l'intérieur, mais retenant les objets solides, **caractérisée en ce que** ledit cadre (2) comprend une partie fixe disposée de manière à contenir au moins une roue de véhicule dotée d'un pneumatique (11) sur celle-ci et à être fixée à une plaque d'appui (10) ou au sol, et une partie de porte mobile (5) soutenue par ladite partie fixe de manière à pouvoir être déplacée entre une position fermée et une position ouverte et ayant une répartition de masse la faisant se fermer spontanément par gravité sous l'effet de son propre poids lorsqu'elle est déplacée de sa position ouverte.

2. Une cage selon la revendication 1, **caractérisée en ce que** ladite porte (5) est montée de manière à pouvoir tourner sur ladite partie fixe et est formée comme un secteur cylindrique afin de répartir uniformément toute poussée à laquelle elle est soumise lors de l'éclatement d'un pneumatique (5) à l'intérieur de la cage (1) de manière à ce que la poussée résultante traverse l'axe de rotation de ladite porte (5), l'empêchant ainsi de s'ouvrir.

3. Une cage selon la revendication 2, **caractérisée en ce que** ladite porte (5), dans sa position ouverte, est entièrement rentrée dans ledit cadre fixe (2).

4. Une cage selon l'une quelconque des revendications précédentes, **caractérisé en ce que** ledit cadre fixe (2) comprend un dispositif de gonflement (6) externe par rapport à ladite cage (1).

5. Une cage selon la revendication 4, **caractérisée en ce que** ledit dispositif de gonflement (6) comprend une unité de commande et de réglage de pression (24), des moyens de soupape de sécurité (25) pouvant être raccordés à une source d'air comprimé et étant raccordés à ladite unité de commande (24), et des moyens de capteur ou de transducteur (25a) disposés de manière à bloquer lesdits moyens de soupape de sécurité (25) lorsque ladite porte (5) n'est pas dans sa position fermée.

6. Une cage selon l'une quelconque des revendications précédentes, **caractérisée en ce que** ladite partie fixe (2) et ladite porte (5) sont formées par des segments tubulaires soudés.

7. Une cage selon l'une quelconque des revendications précédentes, **caractérisée en ce qu'**elle est recouverte par des moyens de protection.

8. Une cage selon la revendication 7, **caractérisée en ce que** lesdits moyens de protection sont au moins partiellement composé par une plaque métallique.

9. Une cage selon la revendication 7, **caractérisée en ce que** ledit moyen de protection comprennent un matériau plastique en feuille perforée résistant aux impacts.
